# FASCICULE DE BREVET EUROPEEN

(11) **EP 3 952 040 B1**
(45) Date de publication et mention de la délivrance du brevet: **30.10.2024**
(21) Numéro de dépôt: 21187807.9
(22) Date de dépôt: 26.07.2021
(51) Int. Cl.: H02B 1/36

(54) **SYSTÈME DE PILOTAGE D'UN TABLEAU ÉLECTRIQUE BASSE TENSION ET PROCÉDÉ DE PILOTAGE CORRESPONDANT**
STEUERSYSTEM FÜR EINE NIEDERSPANNUNGSSCHALTANLAGE UND ENTSPRECHENDES STEUERUNGSVERFAHREN
SYSTEM FOR CONTROLLING A LOW-VOLTAGE ELECTRICAL PANEL AND CORRESPONDING CONTROL METHOD

(30) Priorité: 07.08.2020 FR 2008365; 12.11.2020 FR 2011587
(43) Date de publication de la demande: 09.02.2022
(73) Titulaire: Soreel Societe de Realisation d'Equipements Electriques, 49304 Cholet Cedex (FR)
(72) Inventeur: DAMNEY, Pierre-Yves, 49300 CHOLET (FR); LOPEZ, Olivier, 44470 CARQUEFOU (FR)
(74) Mandataire: Vidon Brevets & Stratégie

(56) Documents cités:
- EP-A1- 2 525 453
- US-A1- 2010 020 475
- US-A1- 2017 285 839

## Description

### Domaine technique

Le domaine de l'invention est celui des installations électriques, et plus particulièrement des tableaux électriques basse tension, ou TGBT. Plus particulièrement encore, l'invention concerne le contrôle, ou le pilotage, d'un tel tableau électrique basse tension.

L'invention trouve notamment son application dans le domaine de la distribution d'électricité dans tous types de milieux, allant des installations industrielles aux installation hospitalières en passant par les installations électriques du secteur tertiaire.

### Art antérieur

Un tableau électrique basse tension, ou TGBT, est un répartiteur recevant une ou plusieurs alimentations électriques de sources dites principales, provenant par exemple de fournisseurs d'électricité, et/ou de sources dites de remplacement comme des groupe électrogènes. Un tel TGBT permet notamment de distribuer de l'énergie électrique dans tous types de milieux, allant des installations industrielles aux installation hospitalières en passant par les installations électriques du secteur tertiaire, et ce en assurant le contrôle et la commande de la distribution, le suivi de la consommation électrique, et également la protection des différentes installations de ce tableau.

Le TGBT comprend une pluralité d'emplacements, recevant chacun une unité fonctionnelle distribuant le courant électrique à des "consommateurs", c'est-à-dire des éléments nécessitant de l'électricité, selon des conditions (puissance, tension, intensité...) spécifiques. Chaque unité fonctionnelle doit donc être paramétrée spécifiquement en conséquence.

Il est connu du document US 2017285839 un exemple d'installation électrique. Le document EP 2525453 décrit un module enfichable coopérant, lorsqu'enfiché dans un puit d'une installation de commutation électrique à basse tension, avec un dispositif de mémoire. Le document US 2010020475 décrit un autre exemple de module enfichable.

De tels tableaux électriques basse tension doivent faire l'objet d'une surveillance et d'une maintenance régulière, de sorte à pouvoir anticiper d'éventuels problèmes et pouvoir intervenir rapidement. D'éventuelles interventions en cas de panne ou défaillance doivent également être faites rapidement, qu'il s'agisse d'une réparation ou d'un remplacement.

Ainsi, les opérateurs (techniciens, maintenanciers ou exploitants) sont régulièrement amenés à remplacer, ajouter ou retirer une ou plusieurs unités fonctionnelles.

De telles opérations de surveillance ou de maintenance nécessitent une intervention physique mais également des étapes de contrôle, de configuration matérielle, de paramétrage et/ou de programmation. Ces opérations sont complexes, prennent un temps non négligeable lors de phases critiques et requièrent des connaissances particulières notamment en programmation, automatisme, réseau de communication.

Les opérateurs disposent généralement d'un outil de contrôle et/ou de paramétrage, classiquement sous la forme d'un ordinateur portable. Ils doivent être formés et expérimentés, et ces interventions sont relativement complexes et longues. Il existe donc un risque d'une surveillance ou d'une maintenance non régulière ou insuffisante, d'un besoin de moyens humains importants, de temps d'intervention long et/ou de mise en place d'une unité fonctionnelle réparée ou de remplacement qui n'est pas correctement paramétrée, ou qui n'est pas replacée dans son bon emplacement.

Ceci peut entrainer une défaillance ou une destruction non seulement du TGBT et de ses unités fonctionnelles, mais également des consommateurs en aval, potentiellement avec des conséquences graves, par exemple lorsqu'il s'agit d'alimenter des appareils médicaux dans un hôpital.

Ainsi, il existe un besoin d'amélioration de ces tableaux électriques basse tension.

L'invention a notamment pour objectif de pallier au moins certains de ces inconvénients de l'art antérieur.

### Exposé de l'invention

L'invention répond à ce besoin en proposant un système de pilotage d'un tableau électrique basse tension tel que défini dans la revendication 1.

Ainsi, l'invention propose une approche nouvelle et inventive permettant de résoudre au moins en partie certains des inconvénients de l'art antérieur.

Notamment, l'invention permet un contrôle de la configuration matérielle, du paramétrage et/ou de la programmation des unités fonctionnelles de façon sûre, fiable et efficace. Les interventions humaines sont réduites, la détection d'un retrait ou de l'insertion d'une unité fonctionnelle ainsi que le contrôle de son paramétrage étant faits de façon automatique.

Cela permet ainsi de simplifier les opérations de surveillance et de maintenance de tels tableaux électriques basse tension, mais également de faire ces opérations de surveillance et de maintenance de manière plus rapide et moins coûteuse.

En outre, cela permet de sécuriser la réalisation de telles opérations du fait que les connaissances nécessaires à leur réalisation sont simplifiées. La fiabilité ainsi que la sécurité de telles installations s'en trouvent accrues.

L'invention telle que définie dans la revendication 1 comprend un unique superviseur connecté à toutes les unités fonctionnelles.

Ainsi, cela permet de limiter le nombre de pièces mises en oeuvre et donc de limiter le coût d'utilisation d'un tel système de pilotage.

Selon au moins un mode de réalisation particulier de l'invention, chacune des unités fonctionnelles peut prendre au moins trois états dont :
- un état désactivé, lorsque l'unité fonctionnelle est absente d'un emplacement donné du tableau électrique basse tension, l'organe de coupure étant ouvert ;
- un état transitoire, dans lequel l'unité fonctionnelle est présente dans un emplacement donné du tableau électrique basse tension et est en cours de contrôle des informations d'identification et de paramétrage correspondantes, l'organe de coupure étant ouvert ;
- un état activé, dans lequel l'unité fonctionnelle est présente dans un emplacement donné du tableau électrique basse tension et associée au module de contrôle préalablement affecté à cet emplacement donné et les informations de paramétrage du module de contrôle étant identiques à celles stockées par le superviseur, l'organe de coupure étant fermé.

La sécurité est ainsi améliorée, puisque l'unité fonctionnelle ne passe dans l'état activé qu'après contrôle du paramétrage.

Selon au moins un mode de réalisation particulier de l'invention, l'unité fonctionnelle comprend en outre des moyens de signalisation de son état.

Ainsi, l'opérateur peut visualiser aisément l'état de chacune des unités fonctionnelles et, dans l'hypothèse où il doit faire une intervention sur une ou plusieurs unités, visualiser l'emplacement où il doit faire son intervention.

Selon au moins un aspect d'un mode de réalisation de l'invention, le système comprend en outre une interface de communication avec un opérateur, permettant que, lorsque l'unité fonctionnelle est dans un état de défaut ou de non fonctionnement, le superviseur envoie une information vers l'interface sous la forme d'une demande d'instructions de commande.

Ainsi, cela permet à un opérateur d'identifier, par le biais de l'information envoyée par le superviseur, une instruction de commande à donner ou une intervention à effectuer.

Selon au moins un aspect d'un mode de réalisation de l'invention, l'organe de coupure comprend un disjoncteur et/ou un contacteur.

Selon au moins un aspect d'un mode de réalisation de l'invention, les moyens de communication comprennent :
- des moyens de communication filaires appartenant au groupe comprenant les liaisons RS485 et les liaisons Ethernet ; et/ou
- des moyens de de communication sans fil appartenant au groupe comprenant les liaisons Wifi, BlueTooth, RFID, NFC, radio.

Selon au moins un aspect d'un mode de réalisation de l'invention, le superviseur effectue un contrôle périodique du nombre d'unités fonctionnelles dans le tableau électrique basse tension et détecte périodiquement un retrait ou une insertion d'une unité fonctionnelle dans le tableau électrique basse tension.

Selon au moins un aspect d'un mode de réalisation de l'invention, l'alimentation électrique est choisie parmi une alimentation principale ou une alimentation de remplacement.

Selon au moins un aspect d'un mode de réalisation de l'invention, l'unité fonctionnelle peut être choisie parmi une platine ou un tiroir.

Selon au moins un aspect d'un mode de réalisation de l'invention, le au moins un capteur appartient au groupe comprenant :
- les capteurs de tension ;
- les capteurs de courant ;
- les capteurs de contrôle de l'intégrité de l'organe de coupure de courant, et
- Les capteurs de température.

Selon au moins un aspect d'un mode de réalisation de l'invention, au moins un capteur tient compte d'un paramètre prédéterminé appartenant au groupe comprenant :
- un paramètre fonctionnel ;
- des informations sur une unité fonctionnelle ;
- des informations concernant les spécificités d'un programme ;
- des informations concernant un module de contrôle.

Selon au moins un aspect d'un mode de réalisation de l'invention, le module de contrôle présente des moyens d'indentification uniques appartenant au groupe comprenant :
- un numéro de série ;
- un code produit ;
- une adresse de communication.

L'invention concerne également un procédé de pilotage d'un tableau électrique basse tension mettant en oeuvre un système de pilotage tel que décrit précédemment. En outre, le procédé met en oeuvre les étapes suivantes, dans le superviseur :
- détection d'une insertion d'une unité fonctionnelle dans le tableau électrique dans un emplacement donné du tableau électrique ;
- obtention des données d'identification affectées au module de contrôle de l'unité fonctionnelle insérée ;
- si les données d'identification correspondent à celles préalablement installées à l'emplacement donné :
   ∘ obtention des données de paramétrage du module de contrôle, et
   ∘ si les données de paramétrage obtenues sont différentes des données de paramétrage stockées dans le superviseur, transmission des données de paramétrage au module de contrôle, afin de le mettre à jour.

Selon au moins un aspect d'un mode de réalisation de l'invention, le procédé comprend une étape de détection d'un retrait d'une unité fonctionnelle d'un emplacement donné du tableau électrique basse tension.

Selon au moins un aspect d'un mode de réalisation de l'invention, le procédé comprend une étape de stockage de la copie des informations de paramétrage associées aux informations d'identification.

Selon au moins un aspect d'un mode de réalisation du procédé, chaque module présente des moyens d'identification uniques comprenant au moins l'une des données parmi :
- un numéro de série ;
- un code produit ;
- une adresse de communication ;
- une date de maintenance ;
- des informations de paramétrage de l'unité fonctionnelle associée.

Selon au moins un aspect d'un mode de réalisation du procédé, les informations d'identification de l'unité fonctionnelle comprennent au moins l'une des données parmi :
- un numéro de série ;
- un code produit ;
- une adresse de communication ;
- une date de maintenance ;
- un module de contrôle associé ;
- des informations de paramétrage.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] est une vue en perspective d'un tableau électrique basse tension contenant un système de pilotage selon un mode de réalisation de l'invention ;
[Fig 2] est un schéma électrique d'une installation électrique incluant un tableau électrique basse tension muni d'un système de pilotage selon un mode de réalisation de l'invention ;
[Fig 3] est un schéma d'architecture d'un tableau électrique basse tension muni d'un système de pilotage selon un mode de réalisation de l'invention ;
[Fig 4] est un autre schéma d'architecture d'un tableau électrique basse tension muni d'un système de pilotage selon un mode de réalisation de l'invention ;
[Fig 5] est encore un autre schéma d'architecture d'un tableau électrique basse tension muni d'un système de pilotage selon un mode de réalisation de l'invention ;
[Fig 6] est un schéma illustrant les interactions entre les différents éléments du système et un opérateur, et
[Fig 7] est un schéma illustrant un procédé de pilotage d'un tableau électrique basse tension selon un mode de réalisation de l'invention.

### Description détaillée de modes de réalisation de l'invention

Le principe général de l'invention repose sur la mise en oeuvre d'un système de pilotage d'un tableau électrique basse tension permettant de mettre oeuvre une surveillance ainsi que des étapes de contrôle, de configuration matérielle, de paramétrage et/ou de programmation qui sont faites automatiquement par le système de pilotage de sorte à limiter les besoins d'intervention d'un opérateur.

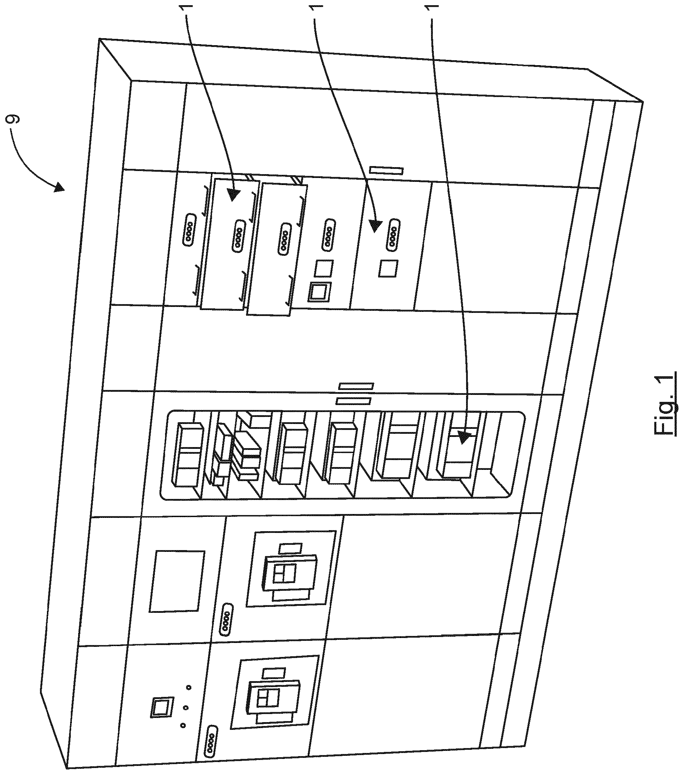

On illustre par la suite un mode de réalisation de l'invention, traité à titre de simple exemple illustratif, et non limitatif, avec l'appui des figures 1 à 7.

Comme déjà mentionné, un tableau électrique basse tension, est un répartiteur recevant une ou plusieurs alimentations électriques et la redistribuant.

Comme illustré sur la figure 1, le tableau électrique basse tension 9 comprend une pluralité d'emplacements, recevant chacun une unité fonctionnelle 1 distribuant le courant électrique à des "consommateurs", c'est-à-dire des éléments nécessitant de l'électricité dans des conditions prédéterminées, pour lesquelles l'unité fonctionnelle est paramétrée.

Ces unités fonctionnelles 1 peuvent prendre plusieurs formes mécaniques, par exemple des platines ou des tiroirs.

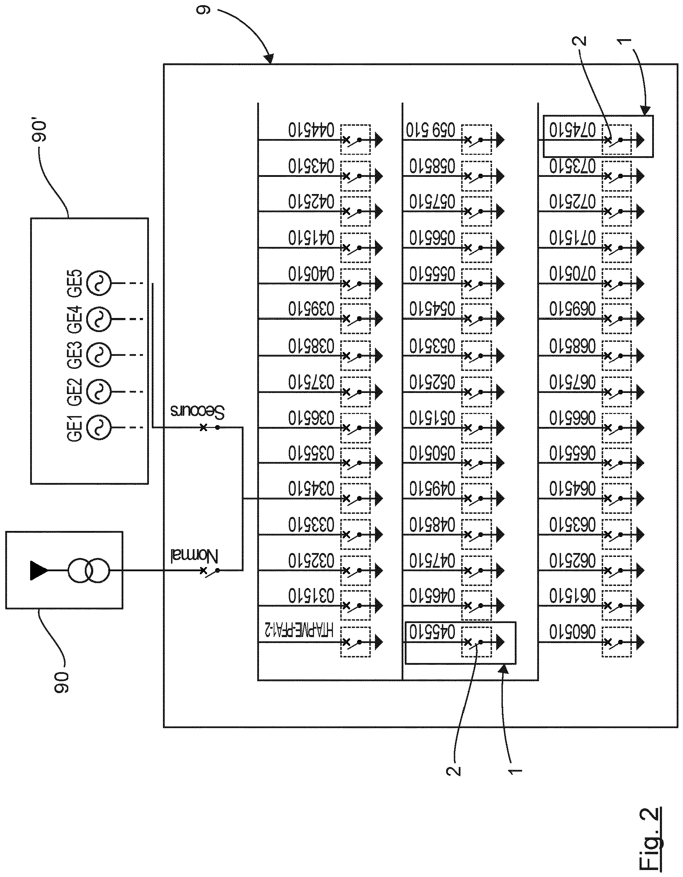

Comme illustré en figure 2, chacune de ces unités fonctionnelles 1 intégrée dans le tableau électrique basse tension 9 est raccordée en amont à une alimentation électrique 90, 90' et en aval à un élément à alimenter, ou consommateur.

L'alimentation électrique peut être choisie parmi une alimentation principale ou une alimentation de remplacement, voire même parmi plusieurs alimentations. Les sources dites principales peuvent provenir par exemple de fournisseurs d'électricité, tandis que les sources dites de remplacement peuvent prendre la forme de groupes électrogènes. Ici, en figure 2, ces unités fonctionnelles 1 sont raccordées à une alimentation principale 90 ainsi qu'à une pluralité de groupes électrogènes 90'.

Chacune des unités fonctionnelles comprend en outre un organe de coupure 2. Selon les modes de réalisation, cet organe de coupure 2 peut comprendre un disjoncteur et/ou un contacteur.

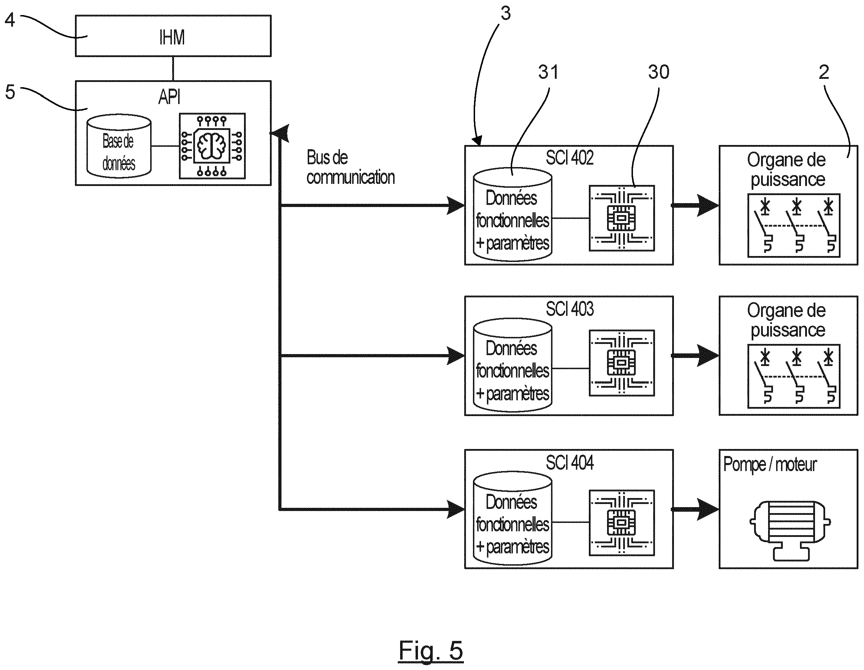

Comme illustré en figure 5, et selon l'invention, chacune des unités fonctionnelles 1 contenue dans le tableau électrique basse tension 9 comprend un module de contrôle 3.

Ce module de contrôle 3 est de préférence associé à une unique unité fonctionnelle 1 de sorte à ce que la surveillance de cette unité fonctionnelle soit la plus fiable possible.

De sorte à pourvoir vérifier une bonne association d'un module de contrôle à une unité fonctionnelle donnée, le module de contrôle peut présenter, selon un mode de réalisation, des moyens d'indentification uniques appartenant au groupe comprenant :
- un numéro de série ;
- un code produit ;
- une adresse de communication.
- des informations de paramétrage de l'unité fonctionnelle associée.

De tels modules de contrôle réalisent des fonctions de contrôle-commande, mesures électriques et protection des consommateurs. Ils sont de préférence placés au plus près de l'organe de coupure 2. Pour fonctionner, ces capteurs ont besoin de paramètres fonctionnels, matériels, de programmes spécifiques (au format "ladder" par exemple).

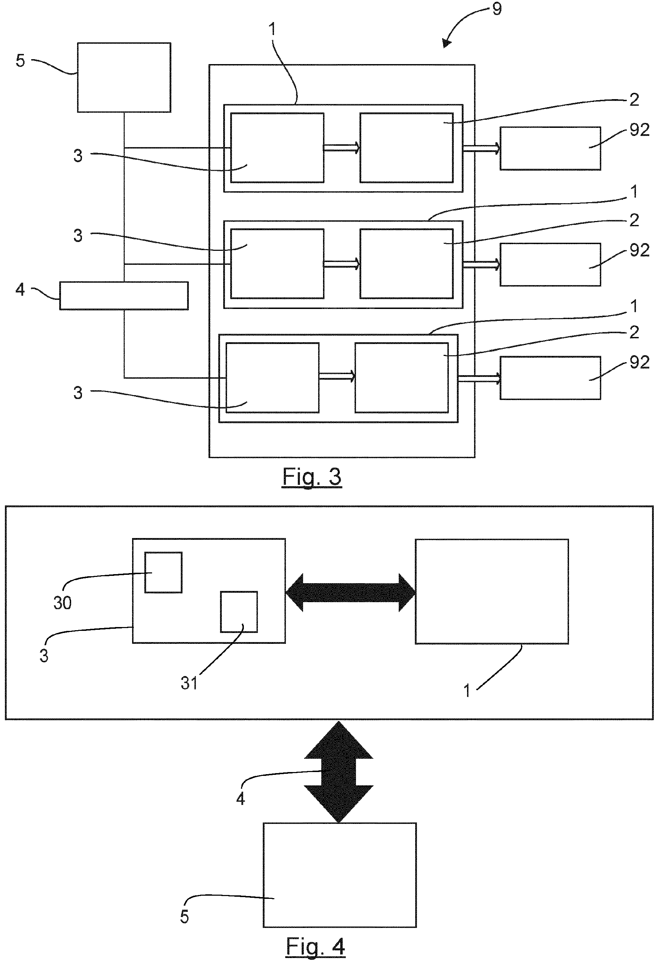

De sorte à réaliser cette fonction, et comme illustré notamment en figure 4, le module de contrôle 3 comprend au moins un capteur 30 et une mémoire 31.

Le capteur 30 peut, selon les modes de réalisation, appartenir au groupe comprenant :
- les capteurs de tension ;
- les capteurs de courant ;
- les capteurs de contrôle de l'intégrité de l'organe de coupure de courant, et
- les capteurs de température.

De cette manière, ce capteur 30 apporte au module de contrôle 3 des informations permettant de surveiller l'unité fonctionnelle 1 associée.

Il est à noter que, pour effectuer les différentes mesures, le capteur 30 peut tenir compte d'au moins un paramètre prédéterminé, qui peut, selon les modes de réalisation, appartenir au groupe comprenant :
- un paramètre fonctionnel ;
- des informations sur une unité fonctionnelle ;
- des informations concernant les spécificités d'un programme ;
- des informations concernant un module de contrôle.

La mémoire 31 contient au moins des informations d'identification de l'unité fonctionnelle 1 et des informations de paramétrage de cette unité fonctionnelle 1.

Dans ce mode de réalisation, les informations d'identification de l'unité fonctionnelle 1 comprennent au moins l'une des données parmi :
- un numéro de série ;
- un code produit ;
- une adresse de communication ;
- une date de maintenance ;
- un module de contrôle associé ;
- des informations de paramétrage.

En outre, les informations de paramétrage de l'unité fonctionnelle peuvent comprendre au moins l'une des données parmi :
- des données de tension maximale à fournir ;
- des données d'intensité maximale à fournir ;
- une durée d'utilisation optimale ;
- un calendrier de maintenance.

Par ailleurs, chacune des unités fonctionnelles 1 comprend des moyens de communication 4 avec un superviseur 5, ou automate.

Ce superviseur 5 supervise et gère l'ensemble des modules de contrôle pour autoriser ou non la distribution électrique au niveau des consommateurs. Il peut effectuer des fonctions d'exploitation, d'analyse de consommation, de maintenance préventive et prédictive.

Pour communiquer avec ce superviseur 5 les moyens de communication que possèdent les unités fonctionnelles 1 peuvent comprendre, selon les modes de réalisation :
- des moyens de communication filaires appartenant au groupe comprenant les liaisons RS485 et les liaisons Ethernet ; et/ou
- des moyens de de communication sans fil appartenant au groupe comprenant les liaisons Wifi, BlueTooth, RFID, NFC, radio.

Dans ce mode de réalisation, et comme notamment illustré en figure 3, le système de pilotage comprend un unique superviseur 5 connecté à l'ensemble des unités fonctionnelles 1.

Comme illustré en figure 3, le tableau électrique basse tension 9 comprend 3 unités fonctionnelles 1 reliées en sortie à des consommateurs 92. Chacune de ces unités fonctionnelles 1 comprend un module de contrôle 3 individuel et un organe de coupure 2 individuel. En outre, chacune de ces unités fonctionnelles est reliée, via les moyens de communication 4, au superviseur 5.

Ce superviseur 5 stocke également une copie des informations de paramétrage associées aux informations d'identification.

Selon l'invention, le rôle du superviseur 5 est de détecter un retrait ou une insertion d'une unité fonctionnelle 1 dans le tableau électrique basse tension 9.

Cette détection de ce retrait ou cette insertion se fait par la détection de l'insertion ou du retrait du module de contrôle associé à une unité fonctionnelle donnée.

En d'autres, termes, le superviseur 5 surveille les modules de contrôle du tableau électrique de sorte à surveiller le nombre d'unités fonctionnelles présentes dans le tableau électrique basse tension 9, le superviseur surveillant donc les variations de ce nombre.

En cas d'insertion d'une unité fonctionnelle 1 dans un emplacement donné du tableau électrique basse tension 9, le superviseur 5 détecte si l'unité fonctionnelle 1 est associée à l'emplacement donné, en fonction des informations d'identification.

Si c'est le cas, le superviseur 5 transmet au module de contrôle 3 les informations de paramétrage correspondantes, de façon à les mettre à jour si celles présentes dans la mémoire 31 du module de contrôle 3 ne correspondent pas à celles stockées par le superviseur 5.

Ces informations de paramétrage peuvent ne pas correspondre à celles présentes dans la mémoire 31 du module de contrôle 3 par exemple si le module de contrôle est nouveau.

De ce fait, chacune des unités fonctionnelles 1 peut donc prendre au moins trois états, en fonction notamment de son placement ou non dans le tableau électrique basse tension, dont :
- un état désactivé, lorsque l'unité fonctionnelle 1 est absente d'un emplacement donné du tableau électrique basse tension 9, l'organe de coupure 2 étant ouvert ;
- un état transitoire, dans lequel l'unité fonctionnelle 1 est présente dans un emplacement donné du tableau électrique basse tension 9 et est en cours de contrôle des informations d'identification et de paramétrage correspondantes, l'organe de coupure 2 étant ouvert ;
- un état activé, dans lequel l'unité fonctionnelle 1 est présente dans un emplacement donné du tableau électrique basse tension 9 et associée au module de contrôle 3 préalablement affecté à cet emplacement donné et les informations de paramétrage du module de contrôle 3 étant identiques à celles stockées par le superviseur 5, l'organe de coupure 2 étant fermé.

De sorte à faciliter la visualisation de l'état d'une unité fonctionnelle 1, elles peuvent en outre comprendre en outre de signalisation de l'état.

Par exemple, ces moyens de signalisation peuvent être présents sous la forme de diodes de couleur, chaque couleur indiquant un état.

Ces moyens de signalisation peuvent également se trouver sous la forme d'un signal sonore différent indiquant le passage d'un état à un autre.

Comme illustré en figure 5 le système comprend en outre une interface 6 de communication avec un opérateur. De ce fait, lorsqu'une unité fonctionnelle 1 est dans un état de non fonctionnement, le superviseur 5 peut envoyer une information vers l'interface 6 sous la forme d'une demande d'instructions de commande.

Une telle interface 6 homme machine peut par exemple être mise en oeuvre sous la forme d'un écran tactile permettant à un opérateur de saisir des instructions de commande en réponse à une demande du superviseur.

Ainsi, si une ou plusieurs unités fonctionnelles sont absentes, le superviseur 5 le détecte et l'indique à l'opérateur via son interface 6.

En d'autres termes, le superviseur 5 réalise plusieurs fonctions :
- mémorisation de l'ensemble des paramètres de tous les modules de contrôle, voire de la configuration du tableau électrique basse tension ;
- détection, qui peut être faite en permanence, si un module de contrôle est absent c'est-à-dire qu'une unité fonctionnelle vient d'être retirée ;
- détection si un module de contrôle vient d'être connecté, c'est-à-dire qu'une unité fonctionnelle vient d'être ajoutée ;
- détection si un module de contrôle connu redevient communicant, c'est-à-dire qu'une unité fonctionnelle a potentiellement été déplacée.

Le superviseur peut également vérifier cycliquement la configuration des modules de contrôles. En d'autres termes, le superviseur peut effectuer un contrôle périodique du nombre d'unités fonctionnelles dans le tableau électrique basse tension 9 et détecter périodiquement un retrait ou une insertion d'une unité fonctionnelle 1 dans ce tableau.

Une telle mise en oeuvre permet ainsi d'assurer une continuité de service au niveau des unités fonctionnelles.

Lors du retour d'une unité fonctionnelle, le superviseur ou l'automate effectue, comme déjà développé, un contrôle des données et paramètres du module de contrôle, c'est-à-dire vérifie si les données d'identification affectées au module de contrôle 3 de l'unité fonctionnelle 1 correspondent à celles préalablement intallées à l'emplacement et les informations de paramétrage sont cohérentes.

Plusieurs cas de figures peuvent se présenter :
- si les données d'identification affectées au module de contrôle 3 de l'unité fonctionnelle 1 correspondent à celles préalablement installées à l'emplacement et les informations de paramétrage sont cohérentes, c'est un retour à une situation normale ;
- si les données d'identification affectées au module de contrôle 3 de l'unité fonctionnelle 1 correspondent à celles préalablement installées à l'emplacement et les informations de paramétrage sont incohérentes, le superviseur reconfigure pour assurer une continuité de service ;
- si les données d'identification affectées au module de contrôle 3 de l'unité fonctionnelle 1 ne correspondent pas à celles préalablement installées à l'emplacement, et qu'une seule unité fonctionnelle est absente, le superviseur reconfigure le module de contrôle automatiquement ;
- si les données d'identification affectées au module de contrôle 3 de l'unité fonctionnelle 1 ne correspondent pas à celles préalablement installées à l'emplacement, et plusieurs unités fonctionnelles sont absentes, le superviseur interroge un opérateur via l'interface 6 puis reconfigure le module de contrôle en fonction des choix effectués par l'opérateur.

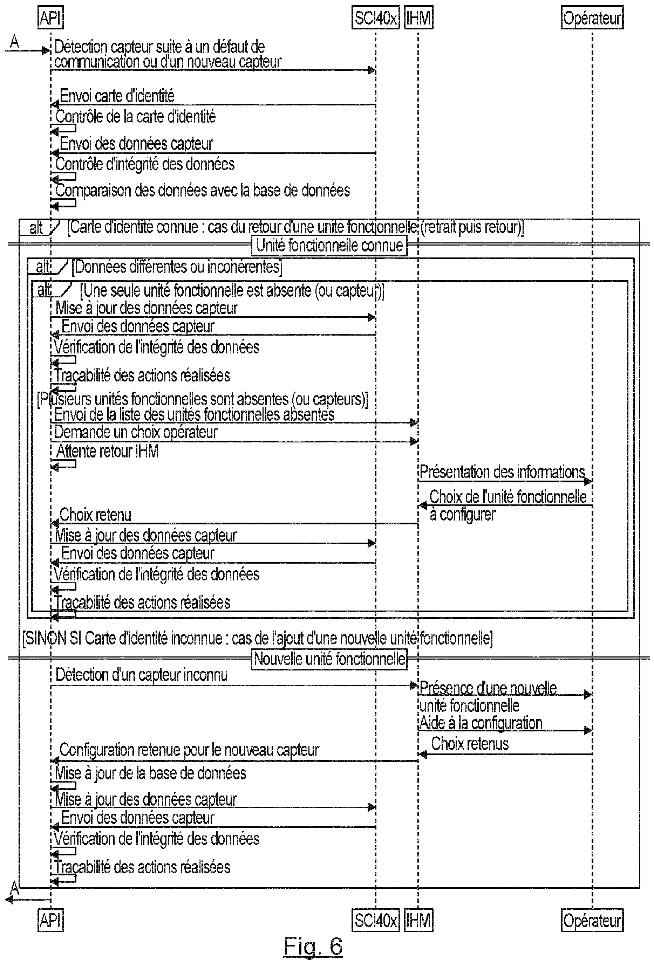

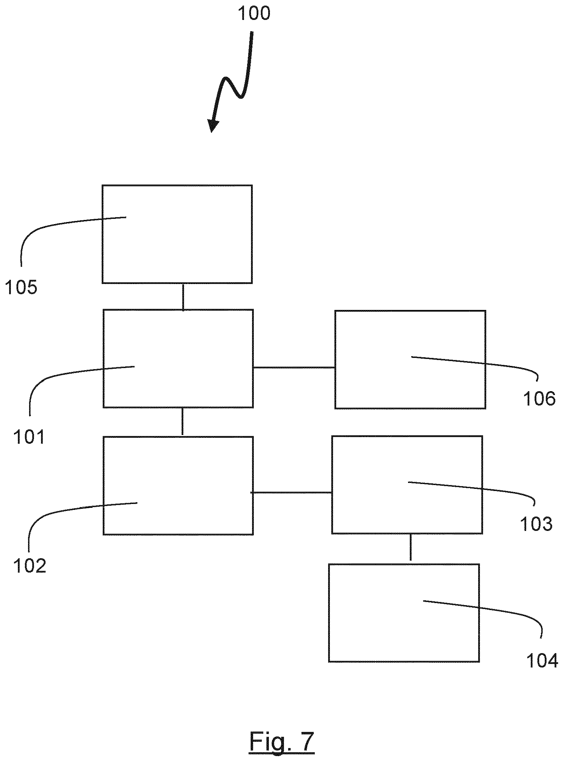

Ainsi, et comme également visible en figure 6 et 7, le système de pilotage met en oeuvre un procédé de pilotage 100 du tableau électrique basse tension 9. Ce procédé comprend les étapes suivantes, mises en oeuvre dans le superviseur 5 :
- détection 101 d'une insertion d'une unité fonctionnelle 1 dans le tableau électrique dans un emplacement donné du tableau électrique ;
- obtention 102 des données d'identification affectées au module de contrôle 3 de l'unité fonctionnelle 1 insérée ;
- si lesdites données d'identification correspondent à celles préalablement affectées à l'emplacement donné :
   ∘ obtention 103 des données de paramétrage du module de contrôle 3, et
   ∘ si lesdites données de paramétrage obtenues sont différentes des données de paramétrage stockées dans le superviseur, transmission 104 des données de paramétrage au module de contrôle 3, afin de le mettre à jour.

Dans le mode de réalisation illustré en figure 7, le procédé comprend également une étape de détection 106 d'un retrait d'une unité fonctionnelle 1 d'un emplacement donné du tableau électrique basse tension 9.

La figure 6 présente de façon détaillée les interactions, dans un mode de réalisation, entre :
- l'opérateur ;
- l'interface homme / machine (IHM) de l'unité fonctionnelle ;
- le module de contrôle (SCI40x) ; et
- le superviseur, ou automate, et plus précisément son interface de programmation d'application (API).

La partie supérieure de la figure 6 illustre les échanges directs entre le superviseur et le module de contrôle (ou "capteur" dans cette figure) de l'unité fonctionnelle. En cas de détection d'un défaut ou d'un nouveau capteur, le superviseur obtient ses informations d'identification ("carte d'identité") puis ses informations de paramétrage ("données capteur"). Le superviseur contrôle notamment l'intégrité de ces informations puis les compare avec celles qu'il a stockées dans sa base de données.

Deux cas sont traités, selon que la carte d'identité est connue ou non.

Le premier cas correspond au retour d'une unité fonctionnelle qui avait été retirée, par exemple pour une opération de maintenance. Dans ce cas, si les données capteur sont identiques à celles stockées dans la base de données, la situation est considérée correcte, l'unité fonctionnelle est considérée présente et activée (elle peut délivrer du courant électrique au consommateur qui lui est connecté).

Si les données capteurs sont différentes ou incohérentes, et si une seule unité fonctionnelle est absente, le superviseur demande à l'opérateur d'effectuer une action pour valider la conservation des données préalablement mémorisées ou pour mettre à jour les données par l'importation des nouvelles données du capteur actuellement inséré, et effectue un nouveau contrôle de celles-ci. De préférence, l'opération effectuée est enregistrée, de façon à permettre une traçabilité.

Si plusieurs unités fonctionnelles sont absentes, une intervention de l'opérateur est requise, pour qu'il identifie l'unité fonctionnelle concernée, qui doit être configurée.

En fonction de cette sélection, le superviseur met à jour les données capteur, de la même façon que décrit ci-dessus.

Le second cas correspond à l'ajout d'une nouvelle unité fonctionnelle. Dans ce cas, le superviseur envoie, via l'IHM de cette nouvelle unité fonctionnelle, une demande d'information à l'opérateur, qui fournit des données de configuration via cette IHM. La configuration est enregistrée dans la base de données du superviseur, qui met ensuite à jour les données capteur dans le module de contrôle de l'unité fonctionnelle, comme précédemment décrit.

De cette manière, il est possible de détecter tout changement d'état d'une unité fonctionnelle et, par conséquent, de détecter tout changement au sein du tableau électrique basse tension qui pourrait affecter son fonctionnement.

En outre, dans le mode de réalisation illustré en figure 7, le procédé comprend également comprend une étape 105 de stockage de la copie des informations de paramétrage associées auxdites informations d'identification.

De ce fait, l'invention, dans au moins un de ses modes de réalisation, présente de nombreux avantages :
- pour toutes ces opérations, aucun outil extérieur n'est nécessaire, ni de logiciel, ni d'interface informatique externe ;
- l'opérateur n'a pas besoin de connaissances en automatisme, programmation. Les opérateurs (qui sont les opérateurs principaux de cette solution) sont guidés pour effectuer les meilleurs choix possibles et assurer la disponibilité de l'installation ;
- un seul système de pilotage regroupe toutes les fonctions (contrôle-commande, mesures électriques, protections), ces fonctions étant à ce jour dissociées et nécessitant plusieurs équipements distincts ;
- il n'est pas nécessaire d'acquérir de connaissance sur les produits, quel que soit l'équipementier, l'invention pouvant être adaptée sur la plupart voire tous les types d'installations électriques existants ;
- le module de contrôle peut être installé dans l'unité fonctionnelle. Cette dernière peut être insérée ou retirée sans perte de fonction du tableau électrique, sans perte de service, en limitant voire supprimant les défauts ou la propagation de défauts sur les moyens de communication ;
- les temps de maintenance sont nettement réduits ;
- l'ajout ou retrait de modules de contrôle ou d'unités fonctionnelles peut être détecté ;
- la signalisation de l'état d'une unité fonctionnelle et l'avertissement à un opérateur pour toute nécessité d'opération de sa part sur une interface est optimisé, et est faite de façon ergonomique.

## Revendications

1. Système de pilotage d'un tableau électrique basse tension (9) comprenant :
- une pluralité d'unités fonctionnelles (1) chacune apte à être insérée dans un emplacement donné dudit tableau électrique basse tension (9) et à être retirée de celui-ci, chacune desdites unités fonctionnelles (1) étant raccordée en amont à une alimentation électrique (90, 90') et en aval à un élément à alimenter et comprenant un organe de coupure (2), et
- un unique superviseur (5) connecté auxdites unités fonctionnelles (1) et étant apte à détecter un retrait ou une insertion d'une unité fonctionnelle dans ledit tableau électrique basse tension, où chacune desdites unités fonctionnelles (1) comprend :
- un module de contrôle (3),
- des moyens de communication (4) avec ledit superviseur (5),
**caractérisé en ce que** le module de contrôle (3) comprend au moins un capteur (30) et une mémoire (31) contenant au moins des informations d'identification de ladite unité fonctionnelle (1) et des informations de paramétrage de ladite unité fonctionnelle (1), et
**en ce que** ledit superviseur (5) stocke une copie desdites informations de paramétrage associées auxdites informations d'identification,
ledit superviseur (5) étant apte, en cas d'insertion d'une unité fonctionnelle (1) dans un emplacement donné dudit tableau électrique basse tension (9), à détecter si ladite unité fonctionnelle (1) est associée audit emplacement donné, en fonction desdites informations d'identification, et à transmettre audit module de contrôle (3) les informations de paramétrage correspondantes, de façon à les mettre à jour si celles présentes dans la mémoire (31) dudit module de contrôle (3) ne correspondent pas à celles stockées par le superviseur (5).

2. Système de pilotage selon la revendication 1, **caractérisé en ce que** chacune desdites unités fonctionnelles (1) peut prendre au moins trois états dont :
- un état désactivé, lorsque ladite unité fonctionnelle (1) est absente d'un emplacement donné dudit tableau électrique basse tension (9), ledit organe de coupure (2) étant ouvert ;
- un état transitoire, dans lequel ladite unité fonctionnelle (1) est présente dans un emplacement donné dudit tableau électrique basse tension (9) et est en cours de contrôle des informations d'identification et de paramétrage correspondantes, ledit organe de coupure (2) étant ouvert ;
- un état activé, dans lequel ladite unité fonctionnelle (1) est présente dans un emplacement donné dudit tableau électrique basse tension (9) et associée au module de contrôle (3) préalablement affecté à cet emplacement donné et les informations de paramétrage dudit module de contrôle (3) étant identiques à celles stockées par le superviseur (5), ledit organe de coupure (2) étant fermé.

3. Système de pilotage selon la revendication 2, **caractérisé en ce que** ladite unité fonctionnelle (1) comprend en outre des moyens de signalisation de son état.

4. Système de pilotage selon l'une des revendications 2 ou 3, **caractérisé en ce que** ledit système comprend en outre une interface (6) de communication avec un opérateur, et **en ce que**, lorsque ladite unité fonctionnelle (1) est dans un état de non fonctionnement, ledit superviseur (5) envoie une information vers ladite interface (6) sous la forme d'une demande d'instructions de commande.

5. Système de pilotage selon l'une des revendications précédentes, **caractérisé en ce que** l'organe de coupure (2) comprend un disjoncteur et/ou un contacteur.

6. Système de pilotage selon l'une des revendications précédentes, **caractérisé en ce que** les moyens de communication (4) comprennent :
- des moyens de communication filaires appartenant au groupe comprenant les liaisons RS485 et les liaisons Ethernet ; et/ou
- des moyens de de communication sans fil appartenant au groupe comprenant les liaisons Wifi, BlueTooth, RFID, NFC, radio.

7. Système de pilotage selon l'une des revendications précédentes, **caractérisé en ce que** ledit superviseur (5) effectue un contrôle périodique du nombre d'unités fonctionnelles (1) dans ledit tableau électrique basse tension (9) et détecte périodiquement un retrait ou une insertion d'une unité fonctionnelle (1) dans ledit tableau électrique basse tension (9).

8. Procédé de pilotage (100) d'un tableau électrique basse tension (9) mettant en oeuvre un système de pilotage selon l'une quelconque des revendications 1 à 7, **caractérisé en ce qu'**il met en oeuvre les étapes suivantes, dans ledit superviseur (5) :
- détection (101) d'une insertion d'une unité fonctionnelle (1) dans ledit tableau électrique dans un emplacement donné dudit tableau électrique ;
- obtention (102) des données d'identification affectées au module de contrôle (3) de ladite unité fonctionnelle (1) insérée ;
- si lesdites données d'identification correspondent à celles préalablement installées audit emplacement donné :
∘ obtention (103) des données de paramétrage dudit module de contrôle (3), et
∘ si lesdites données de paramétrage obtenues sont différentes des données de paramétrage stockées dans ledit superviseur, transmission (104) desdites données de paramétrage audit module de contrôle (3), afin de le mettre à jour.

9. Procédé de pilotage (100) d'un tableau électrique basse tension (9) selon la revendication 8, **caractérisé en ce qu'**il comprend une étape de détection (106) d'un retrait d'une unité fonctionnelle (1) d'un emplacement donné dudit tableau électrique basse tension (9).

10. Procédé de pilotage (100) d'un tableau électrique basse tension (9) selon la revendication 8, **caractérisé en ce qu'**il comprend une étape (105) de stockage de ladite copie desdites informations de paramétrage associées auxdites informations d'identification.

11. Procédé de pilotage (100) d'un tableau électrique basse tension (9) selon l'une des revendications 8 à 10, **caractérisé en ce que** chaque module présente des moyens d'identification uniques comprenant au moins l'une des données parmi :
- un numéro de série ;
- un code produit ;
- une adresse de communication ;
- des informations de paramétrage de ladite unité fonctionnelle associée.

12. Procédé de pilotage (100) d'un tableau électrique basse tension (9) selon l'une des revendications 8 à 11, **caractérisé en ce que** les informations d'identification de ladite unité fonctionnelle (1) comprennent au moins l'une des données parmi :
- un numéro de série ;
- un code produit ;
- une adresse de communication ;
- une date de maintenance ;
- un module de contrôle associé ;
- des informations de paramétrage.

## Patentansprüche

1. Steuersystem einer elektrischen Niederspannungsschalttafel (9), umfassend:
eine Vielzahl von Funktionseinheiten (1), die jeweils dazu geeignet sind, an einer gegebenen Stelle der elektrischen Niederspannungsschalttafel (9) eingefügt und daraus abgezogen zu werden, wobei jede der Funktionseinheiten (1) stromaufwärts an eine Stromversorgung (90, 90') und stromabwärts an ein zu versorgendes Elementen angeschlossen ist, und ein Unterbrechungselement (2) umfasst, und
einen einzigen Supervisor (5), der mit den Funktionseinheiten (1) verbunden und dazu geeignet ist, ein Abziehen oder ein Einsetzen einer Funktionseinheit in der elektrischen Niederspannungsschalttafel zu erfassen, wobei jede der Funktionseinheiten (1) Folgendes umfasst:
ein Steuermodul (3),
Mittel (4) zur Kommunikation mit dem Supervisor (5)
**dadurch gekennzeichnet, dass** das Steuermodul (3) mindestens einen Sensor (30) und einen Speicher (31) umfasst, der mindestens Identifikationsinformationen der Funktionseinheit (1) und Parametrierungsinformationen der Funktionseinheit (1) enthält, und
dass der Supervisor (5) eine Kopie der Parametrierungsinformationen speichert, die den Identifikationsinformationen zugeordnet sind,
wobei der Supervisor (5) dazu geeignet ist, im Falle des Einsetzens einer Funktionseinheit (1) an einer gegebenen Stelle der elektrischen Niederspannungsschalttafel (9) zu erfassen, ob die Funktionseinheit (1) der gegebenen Stelle in Abhängigkeit von den Identifikationsinformationen zugeordnet ist, und dem Steuermodul (3) die entsprechenden Parametrierungsinformationen derart zu übertragen, dass sie aktualisiert werden, falls die, die in dem Speicher (31) des Steuermoduls (3) vorhandenen denjenigen, die von dem Supervisor (5) gespeichert werden, nicht entsprechen.

2. Steuersystem nach Anspruch 1, **dadurch gekennzeichnet, dass** jede der Funktionseinheiten (1) mindestens drei Zustände annehmen kann, darunter:
einen deaktivierten Zustand, wenn die Funktionseinheit (1) an einer Stelle der elektrischen Niederspannungsschalttafel (9) abwesend ist, wobei das Unterbrechungselement (2) offen ist;
einen Übergangszustand, in dem die Funktionseinheit (1) an einer gegebenen Stelle der elektrischen Niederspannungsschalttafel (9) vorhanden ist und deren Kontrolle der Identifikationsinformationen und entsprechenden Parametrierung gerade läuft, wobei das Unterbrechungselement (2) offen ist;
einen aktiven Zustand, in dem die Funktionseinheit (1) an einer gegebenen Stelle der elektrischen Niederspannungsschalttafel (9) vorhanden und dem Steuermodul (3) zugeordnet ist, dem diese gegebene Stelle zuvor zugewiesen wurde, und die Parametrierungsinformationen des Steuermoduls (3) mit denjenigen, die von dem Supervisor (5) gespeichert werden, identisch sind, wobei das Unterbrechungselement (2) geschlossen ist.

3. Steuersystem nach Anspruch 2, **dadurch gekennzeichnet, dass** die Funktionseinheit (1) außerdem Mittel zum Signalisieren ihres Zustands umfasst.

4. Steuersystem nach einem der Ansprüche 2 oder 3, **dadurch gekennzeichnet, dass** das Steuersystem außerdem eine Kommunikationsschnittstelle (6) mit einem Bediener umfasst, und dass, wenn die Funktionseinheit (1) in einem Nicht-Betriebszustand ist, der Supervisor (5) eine Information an die Schnittstelle (6) in Form einer Steueranweisungsanforderung sendet.

5. Steuersystem nach einem der vorstehenden Ansprüche,
**dadurch gekennzeichnet, dass** das Unterbrechungselement (2) einen Leistungsschalter und/oder ein Schütz umfasst.

6. Steuersystem nach einem der vorstehenden Ansprüche,
**dadurch gekennzeichnet, dass** das Kommunikationsmittel (4) Folgendes umfasst:
- drahtgebundene Kommunikationsmittel, die zu der Gruppe gehören, die die RS485- und die Ethernetverbindungen umfasst; und/oder
- drahtlose Kommunikationsmittel, die zu der Gruppe gehören, die die Wifi-, BlueTooth-, RFID-, N FC-, Funkverbindungen umfassen.

7. Steuersystem nach einem der vorstehenden Ansprüche,
**dadurch gekennzeichnet, dass** der Supervisor (5) eine periodische Kontrolle der Anzahl von Funktionseinheiten (1) in der elektrischen Niederspannungsschalttafel (9) vornimmt und periodisch ein Abziehen oder ein Einsetzen einer Funktionseinheit (1) in die elektrische Niederspannungsschalttafel (9) erfasst.

8. Steuerverfahren (100) einer elektrischen Niederspannungsschalttafel (9), das ein Steuersystem nach einem der Ansprüche 1 bis 7 umsetzt, **dadurch gekennzeichnet, dass** es die folgenden Schritte in dem Supervisor (5) umsetzt:
- Erfassen (101) eines Einsetzens einer Funktionseinheit (1) in der elektrischen Niederspannungsschalttafel an einer Stelle der gegebenen elektrischen Schalttafel;
- Erhalten (102) der Identifikationsdaten, die dem Steuermodul (3) der eingesetzten Funktionseinheit (1) zugewiesen sind;
- falls die Identifikationsdaten denjenigen, die zuvor an der gegebenen Stelle installiert waren, entspricht:
• Erhalten (103) der Parametrierungsdaten des Steuermoduls (3), und
• falls sich die erhaltenen Parametrierungsdaten von den in dem Supervisor gespeicherten Parametrierungsdaten unterscheiden, Übertragung (104) der Parametrierungsdaten an das Steuermodul (3), um es zu aktualisieren.

9. Steuerverfahren (100) einer elektrischen Niederspannungsschalttafel (9) nach Anspruch 8, **dadurch gekennzeichnet, dass** es einen Erfassungsschritt (106) eines Abziehens einer Funktionseinheit (1) aus einer gegebenen Stelle der elektrischen Niederspannungsschalttafel (9) umfasst.

10. Steuerverfahren (100) einer elektrischen Niederspannungsschalttafel (9) nach Anspruch 8, **dadurch gekennzeichnet, dass** es einen Speicherungsschritt (105) der Kopie der Parametrierungsinformationen, die den Identifikationsinformationen zugeordnet sind, umfasst.

11. Steuerverfahren (100) einer elektrischen Niederspannungsschalttafel (9) nach einem der Ansprüche 8 bis 10, **dadurch gekennzeichnet, dass** jedes Modul eindeutige Identifikationsmittel aufweist, die mindestens eine der folgenden Daten umfassen:
- eine Seriennummer;
- einen Produktcode;
- eine Kommunikationsadresse;
- Parametrierungsinformationen der zugeordneten Funktionseinheit.

12. Steuerverfahren (100) einer elektrischen Niederspannungsschalttafel (9) nach einem der Ansprüche 8 bis 11, **dadurch gekennzeichnet, dass** die Identifikationsinformationen der Funktionseinheit (1) mindestens eine der folgenden Daten umfassen:
- eine Seriennummer;
- einen Produktcode;
- eine Kommunikationsadresse;
- ein Wartungsdatum;
- ein zugeordnetes Steuermodul;
- Parametrierungsinformationen.

## Claims

1. A system for controlling a low-voltage electrical panel (9) comprising:
- a plurality of functional units (1) each capable of being inserted into a given location of said low-voltage electrical panel (9) and of being removed therefrom, each of said functional units (1) being connected upstream to a power supply (90, 90') and downstream to an element to be powered and comprising a cut-off member (2), and
- a single supervisor (5) connected to said functional units (1) and being capable of detecting a removal or an insertion of a functional unit in said low-voltage electrical panel,
where each of said functional units (1) comprises:
- a monitoring module (3),
- means (4) of communication with said supervisor (5), **characterised in that** the monitoring module (3) comprises at least one sensor (30) and a memory (31) containing at least identification information of said functional unit (1) and setting information of said functional unit (1), and
**in that** said supervisor (5) stores a copy of said setting information associated with said identification information,
said supervisor (5) being capable, in the case of insertion of a functional unit (1) in a given location of said low-voltage electrical panel (9), of detecting whether said functional unit (1) is associated with said given location, depending on said identification information, and of transmitting the corresponding setting information to said monitoring module (3), so as to update it if said information present in the memory (31) of said monitoring module (3) does not correspond to that stored by the supervisor (5).

2. The control system according to claim 1, **characterised in that** each of said functional units (1) can take at least three states including:
- a deactivated state, when said functional unit (1) is absent from a given location of said low-voltage electrical panel (9), said cut-off member (2) being open;
- a transient state, in which said functional unit (1) is present in a given location of said low-voltage electrical panel (9) and is currently monitoring the corresponding identification and setting information, said cut-off member (2) being open;
- an activated state, in which said functional unit (1) is present in a given location of said low-voltage electrical panel (9) and associated with the monitoring module (3) previously assigned to this given location and the setting information of said monitoring module (3) being identical to that stored by the supervisor (5), said cut-off member (2) being closed.

3. The control system according to claim 2, **characterised in that** said functional unit (1) further comprises means for signalling its state.

4. The control system according to one of claims 2 or 3, **characterised in that** said system further comprises an interface (6) for communication with an operator, and **in that**, when said functional unit (1) is in a non-operating state, said supervisor (5) sends information to said interface (6) in the form of a request for control instructions.

5. The control system according to one of the preceding claims, **characterised in that** the cut-off member (2) comprises a circuit breaker and/or a contactor.

6. The control system according to one of the preceding claims, **characterised in that** the communication means (4) comprise:
- wired communication means belonging to the group comprising the RS485 links and the Ethernet links; and/or
- wireless communication means belonging to the group comprising the Wifi, BlueTooth, RFID, NFC, radio links.

7. The control system according to one of the preceding claims, **characterised in that** said supervisor (5) performs a periodic monitoring of the number of functional units (1) in said low-voltage electrical panel (9) and periodically detects a removal or an insertion of a functional unit (1) in said low-voltage electrical panel (9).

8. A method (100) for controlling a low-voltage electrical panel (9) implementing a control system according to any one of claims 1 to 7, **characterised in that** it implements the following steps, in said supervisor (5):
- detecting (101) an insertion of a functional unit (1) into said electrical panel in a given location of said electrical panel,
- obtaining (102) the identification data assigned to the monitoring module (3) of said inserted functional unit (1);
- if said identification data correspond to those previously installed at said given location:
∘ obtaining (103) the setting data of said monitoring module (3), and
∘ if said obtained setting data are different from the setting data stored in said supervisor, transmitting (104) said setting data to said monitoring module (3), in order to update it.

9. The method (100) for controlling a low-voltage electrical panel (9) according to claim 8, **characterised in that** it comprises a step of detecting (106) a removal of a functional unit (1) from a given location of said low-voltage electrical panel (9).

10. The method (100) for controlling a low-voltage electrical panel (9) according to claim 8, **characterised in that** it comprises a step (105) of storing said copy of said setting information associated with said identification information.

11. The method (100) for controlling a low-voltage electrical panel (9) according to one of claims 8 to 10, **characterised in that** each module has unique identification means comprising at least one of the data from:
- a serial number;
- a product code;
- a communication address;
- setting information of said associated functional unit.

12. The method (100) for controlling a low-voltage electrical panel (9) according to one of claims 8 to 11, **characterised in that** the identification information of said functional unit (1) comprises at least one of the data from:
- a serial number;
- a product code;
- a communication address;
- a maintenance date;
- an associated monitoring module;
- setting information.
